(19) Europäisches Patentamt
European Patent Office
Office européen des brevets

(11) **EP 0 422 245 B1**

(12) **EUROPEAN PATENT SPECIFICATION**

(45) Date of publication and mention
of the grant of the patent:
**14.01.1998 Bulletin 1998/03**

(21) Application number: **90905664.0**

(22) Date of filing: **04.04.1990**

(51) Int Cl.$^6$: **G06T 7/00**, G06K 9/48

(86) International application number:
**PCT/JP90/00455**

(87) International publication number:
**WO 90/12370 (18.10.1990 Gazette 1990/24)**

(54) **RECOGNIZING APPARATUS**

ERKENNUNGSGERÄT

APPAREIL DE RECONNAISSANCE

(84) Designated Contracting States:
**DE FR GB**

(30) Priority: **04.04.1989 JP 84125/89**

(43) Date of publication of application:
**17.04.1991 Bulletin 1991/16**

(73) Proprietor: **NTT DATA COMMUNICATIONS
SYSTEMS CORPORATION
Tokyo 105 (JP)**

(72) Inventors:
• **OKADA, Mamoru
Minato-ku Tokyo 105 (JP)**
• **ONO, Chisato
Minato-ku Tokyo 105 (JP)**

(74) Representative:
**Schmidt-Evers, Jürgen, Dipl.-Ing. et al
Patentanwälte
Mitscherlich & Partner,
Postfach 33 06 09
80066 München (DE)**

(56) References cited:
**EP-A- 0 163 885**          **JP-A- 6 376 080**
**JP-A-60 132 280**          **JP-A-60 245 087**

• **PATTERN RECOGNITION LETTERS vol. 5, no. 4,
April 1987, AMSTERDAM NL pages 285 - 288
T.-Y. PHILLIPS & A. ROSENFELD 'A method of
curve partitioning using arc- chord distance'**

## Description

SPECIFICATION

The present invention is directed to a pattern recognizing apparatus which recognizes a pattern from image data acquired by reading the pattern by raster scanning. More particularly, this invention relates to a pattern recognizing apparatus which recognizes characteristic portions, such as linear portions and curved portions of lines constituting a pattern, or linked portions.

Recently, researches and development concerning pattern recognition have been vividly conducted to simplify a pattern input work.

Present typical pattern recognition procedures are to convert a pattern, input from a raster scan type apparatus, such as a facsimile, into a thinned pattern having a width of one pixel and recognizes lines from this thinned pattern, as disclosed in "Shirai: Pattern Understanding, Ohm Sha Ltd., 1987, 8.25, pp. 120-125," or a thesis by Nagura, "Approximation of Handwritten Line Pattern by Straight Lines and Arcs," Reports of the Institute of Electronics Engineers, 1981/9, Vol, j64-D, No. 9, PP. 839-845.

This method however has a shortcoming such that the thinning requires a great amount of processing time.

The method also has such a problem that deformation or a short-lined segment is generated at the branching portion, the intersection, or the turning portion of a fine line, which requires compensation, thus complicating the structure of a recognizing section to recognize thinned lines.

EP-A-0 163 885 determines curvature at every contour point by the change of angle at successive contour points; depending on the amount of change the point is classified into "straight line segment part" or "curved segment part". Segmentation of the figure is carried out at points where the classification changes.

"A Method of Curve Partitioning Using Arc-Cord distance", T.-Y. Phillips and A. Rozenfeld, Pattern Recognition Letters 5 (1987), discloses curve segmentation by determining the curvature via the distance of a (moving) arc of fixed length from the figure. This measurement is highly sensitive to arc length.

It is therefore an object of the present invention to provide a pattern recognizing apparatus which can simultaneously perform recognition of lines constituting a pattern without thinning the pattern, and recognition of characteristic components, such as linear components, curved components, linked components, complex components and minute components of the lines, and can separate and distinguish the individual characteristic components.

To achieve the above object, according to the present invention, there is provided a pattern recognizing apparatus as defined in claim 1.

According to the present invention, paying attention to a contour pattern representing a pattern with higher fidelity than a thinned, core-line pattern, the curvature of a contour pattern is calculated, and characteristic components including a linear component, curved component, link component, complex component and minute component of a line are separated and distinguished from the contour pattern, thereby recognizing a pattern.

The pattern recognizing apparatus of the present invention can therefore simultaneously perform recognition of lines constituting a pattern and recognition of characteristic components including a linear component, curved component, link component, complex component and minute component of the line, and can distinguish the individual characteristic components.

Fig. 1 is a block structural diagram of a pattern recognizing apparatus according to one embodiment of the present invention;

Fig. 2 is a flowchart for explaining the operation of the pattern recognizing apparatus of this embodiment;

Fig. 3 is a diagram illustrating a pattern stored in a first image memory for explaining the operation of a contour extracting section;

Fig. 4 is a diagram for explaining a curvature factor;

Figs. 5A and 5B respectively are a diagram of line patterns and graphs of output curvature factors for exemplifying the operation of a curvature factor calculating section;

Fig. 6 is a flowchart for explaining the operation of a contour discriminating section;

Figs. 7A and 7B present graphs illustrating curvature factors of individual characteristic components;

Fig. 8 is a diagram showing the result of separating characteristic components corresponding to the line patterns shown in Fig. 5A;

Fig. 9 is a graph of curvature factors for explaining suppression of a false peak;

Fig. 10 is an explanatory diagram of contour searching directions for explaining the operation of a label propagation section;

Fig. 11 is a diagram illustrating the result of discrimination of the characteristic components of pixels in a pattern by the label propagation section in association with Fig. 8;

Figs. 12A through 12E are respectively diagrams of an original pattern, linear components, curved components, link components, and complex and minute components illustrating examples of experiments; and

Fig. 13 is a block structural diagram of a pattern recognizing apparatus according to another embodiment of the present invention.

I. First Embodiment

One preferred embodiment of the present invention will now be described referring to the accompanying drawings.

A. Outline of Structure and Operation

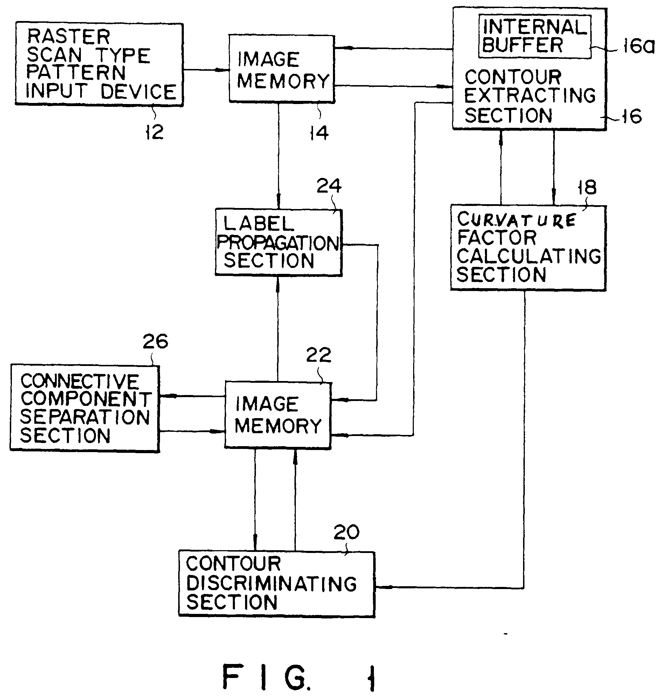

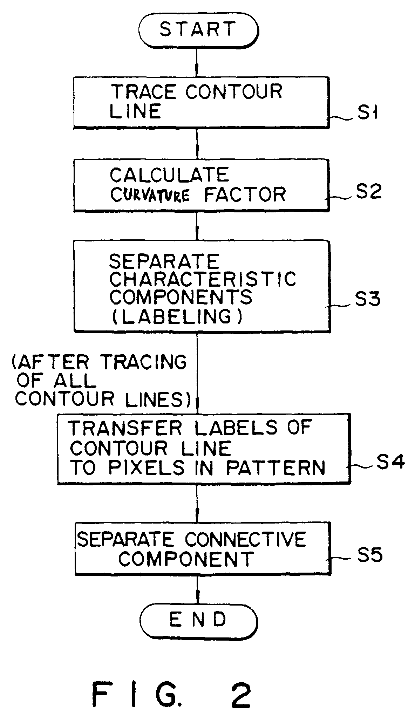

Fig. 1 illustrates the structure of a pattern recognizing apparatus according to one embodiment of the present invention, and Fig. 2 is a flowchart showing the operation. Pixel information, which has been scanned by a raster scan type pattern input device 12, such as a facsimile and an image reader, is stored at a first image memory 14. A contour extracting section 16 extracts contour pixels from the first image memory 14, tracing a contour line (step S1). A curvature factor calculating section 18 calculates the curvature of the contour in the contour pixel, extracted by the contour extracting section 16 (step S2). A contour discriminating section 20 determines the characteristic component of a contour from the curvature factor calculated by the curvature factor calculating section 18, and stores a label representing the constituent in the second image memory 22 (step S3). A label propagation section 24 transforms the pixel information stored in the first image memory 14 into a label, and stores it in the second image memory 22 (step S4). A link component separation section 26 separates link components, referring to the label stored in the second image memory 22 (step S5).

Each step of the flowchart will now be described specifically.

B. Contour Line Tracing

The raster scan type pattern input device 12 reads a pattern by raster scanning, and writes its pixel information with a black pixel as "1" and a white one as "0," into the first image memory 14. After the pattern is read, the contour extracting section 16 is operated, initializing the second image memory 22 with "0". Then, the contour extracting section 16 extracts the contour pixels from the pixel information stored in the first image memory 14, and acquires a line of dots of the contour.

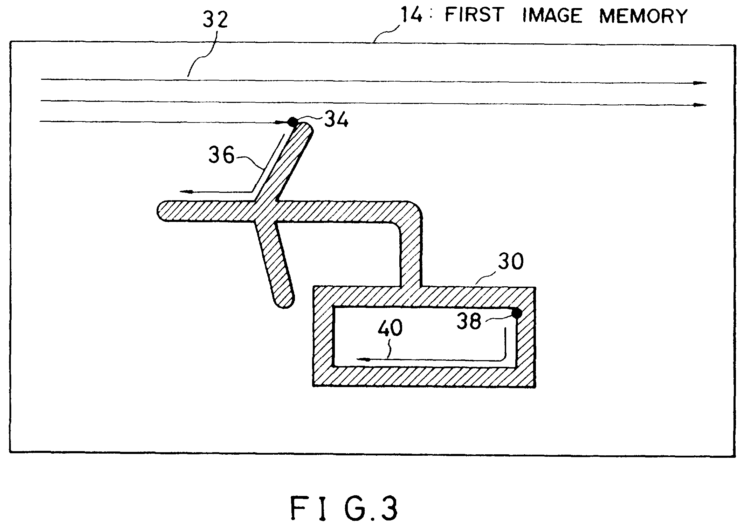

The operation of the contour extracting section 16 will be specifically described, referring to Fig. 3. Assume that pixel information 30 (the black pixel as "1") of a pattern as shown in Fig. 3 is stored in the first image memory 14. In order to search for the pattern, the contour extracting section 16 accesses addresses in the first image memory 14, sequentially incrementing the address thereof, executing raster scanning 32 as illustrated. In other words, the contour extracting section 16 reads out the pixel information by such raster scanning 32, and searches for the pixel information 30 of the pattern.

Upon detection of a transitional point from a white pixel "0" to a black pixel "1," the section 16 stops the raster scanning 32, and starts tracing a contour in a tracing direction 36 from the transitional point as a contour-tracing start point 34. In other words, seeing the black pixel "1" on the left, the transitional points from a white pixel "0" to a black pixel "1" are traced. As the tracing progresses, the extracting section 16 writes "-1" into already-traced pixels in the first image memory 14, and obtains their coordinates, which are stored in turn in an internal buffer 16a. The operation continues until the contour tracing returns to the start point 34.

When one contour trace is completed in such a manner, the contour extracting section 16 outputs a sequence of coordinates of the contour pixels, which constitute a contour line, to the convex factor calculating section 18. When receiving a retrace command from the curvature factor calculating section 18, the contour extracting section 16 restarts the raster scanning 32 at the start point 34. On detecting a new start point 38, the tracing is started in a tracing direction 40, with a black pixel "1" seen on the left as described earlier, and the operation is repeated in the same manner as described above.

The described operation will be over when the first image memory 14 has been entirely scanned by the raster scanning 32. The tracing directions 36 and 40 may be reversed, i.e., directions with a black pixel seen on the right.

C. Curvature Factor Calculation

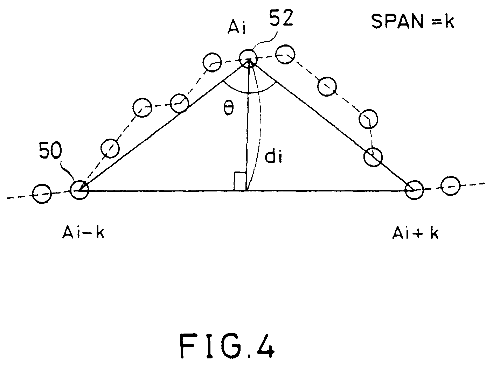

Then, the curvature factor calculating section 18 calculates a curvature factor. The definition of the curvature factor will now be described referring to Fig. 4.

Individual values of a row of coordinates received from the contour extracting section 16 are denoted by $A_1$, $A_2$, ..., $A_n$, where $A_n = (x_n, y_n)$ and n is the number of pixels of a contour. Since the contour line is closed, there exists the relation $A_k = A_{k+n}$. In a sequence of pixels 50, the coordinates of a pixel 52 of interest are given by $A_i (x_i, y_i)$, while the coordinates of the pixels 50, which are respectively located k pixels ahead and behind the pixel 52 of interest, are given by $A_{i-k}$, and $A_{i+k}$. If i - k < 1, $A_{i-k} = A_{n+i-k}$, and if i + k > n, $A_{i+k} = A_{i+k-n}$.

Given that a straight line $L_i$ passes $A_{i-k}$ and $A_{i+k}$, a distance $d_i$ from the pixel $A_i$ of interest to the line $L_i$ is acquired. The distance $d_i$ is called a curvature factor for the pixel $A_i$ of interest. Lines, $\overline{A_i A_{i-k}}$ and $\overline{A_i A_{i+k}}$, are called "span," k defined as the range of the span.

The curvature factor $d_i$ is easily acquired through coordinates transformation, $x \leftarrow x_i - x_{i-k}$, and $y \leftarrow y_i - y_{i-k}$, by the following equation:

$$d_i = \frac{|(y_{i+k} - y_{i-k}) \, x - (x_{i+k} - x_{i-k}) \, y|}{\sqrt{(x_{i+k} - x_{i-k})^2 + (y_{i+k} - y_{i-k})^2}} \qquad (1)$$

where $d_i$ is the distance between $A_{i-k}$ and $A_i$ when $A_{i-k} = A_{i+k}$.

The curvature factor calculating section 18 executes the above calculation for all the pixels ($A_1$, ..., $A_n$) of the contour line to acquire the convex factor of the contour, and outputs the factor to the contour discriminating section 20. The convex factor calculating section 18 also sends a retrace command to the contour extracting section 16 to acquire another curvature factor. The value of the span k should be set to two to three times the pattern line width.

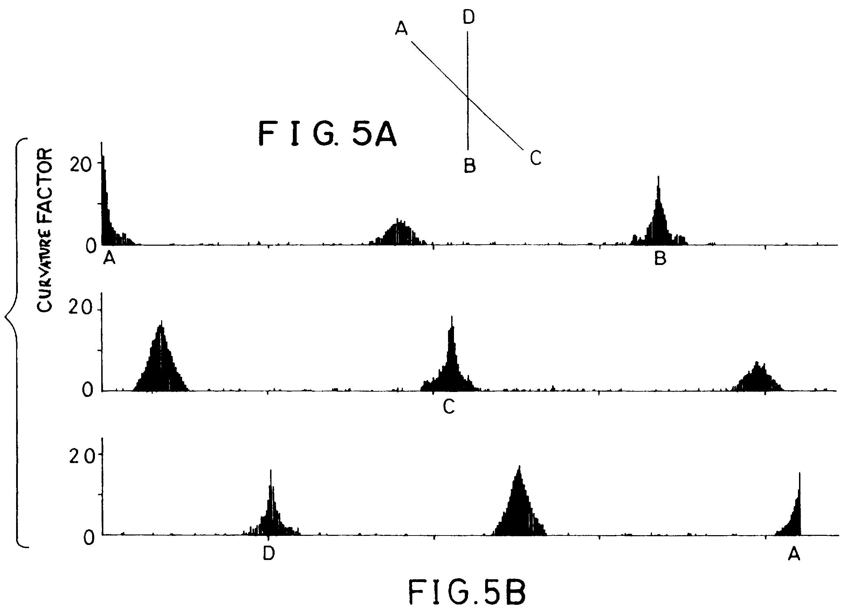

For example, according to a line pattern shown in Fig. 5A, convex factors shown in Fig. 5B are output. The value of the span k is set to "18" in this example.

Theoretically, the following three are given as the characteristics of the curvature factor.

(1) When the contour line is straight and equal to or longer than 2k, the curvature factor $d_i$ is "0".
(2) When the contour line is curved and longer than 2k, the curvature factor $d_i$ of pixels on the curved line is other than "0".
(3) When the pixel $A_i$ of interest is a turning point (which corresponds to a turning point, intersection, branching point, and an edge of a pattern), the curvature factor increases monotonously from $A_{i-k}$ to $A_i$, reaching the maximum at $A_i$, and decreases monotonously to $A_{i+k}$. The acuter the turning angle, the larger the maximum value of the curvature factor $d_i$.

## D. Characteristic Component Separation (Labeling)

The contour discriminating section 20 separates characteristic components from the curvature factor which is supplied from the curvature factor calculating section 18, and writes the result at the address in the second image memory 22 corresponding to the pixel coordinates.

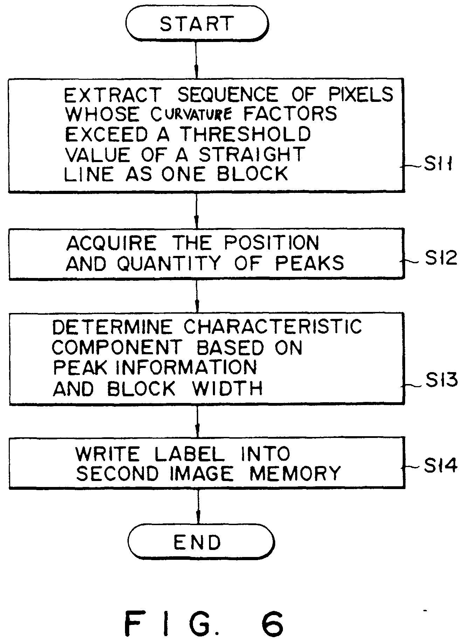

The operation of the contour discriminating section 20 will now be described referring to the flowchart in Fig. 6.

First, the contour discriminating section 20 takes a sequence of pixels, whose curvature factors from the curvature factor calculating section 18 exceed a threshold value T of the straight line, as one block (step S11). The threshold value T of the straight line is set as follows: since the lines of a line pattern stored in the first image memory 14 have been digitized, the curvature factor $d_i$ of the straight line is not always "0." The pixels on a contour with small curvature factor $d_i$ to a degree can be regarded as pixels on a straight line. This threshold value is taken as T. The turning angle θ, which can be extracted due to the setting of the threshold value T of the straight line, should satisfy:

$$k\cos(\theta/2) \geqq T \ (0° \leqq \theta < 180°).$$

The portions where the curvature factors $d_i$'s exceed the threshold value T of the straight line over several pixels in succession, can be considered as some sort of characteristic components, so that the sequence of the pixels are taken out as a block. It should however be noted that the blocks close to one another are grouped into one.

When one block is extracted in this manner, the contour discriminating section 20 acquires peak information consisting of the positions, and the quantity, of peaks (step S12). These peaks are defined by:

$$d_i \geqq \max (d_j: j = i-3, i-2, i-1, i+1, i+2, i+3)$$

$$di > \min (d_j: j = i-3, i-2, i-1, i+1, i+2, i+3).$$

After acquiring the peak information having the positions, and the quantity, of thus defined peaks in a block, the contour discriminating section 20 determines the characteristic components, according to the peak information and a block width (the number of pixels in the block) (step S13). Labels indicating the discriminated characteristic components are written at the address in the second image memory 22 corresponding to the pixel coordinates (step S14).

In other words, a sequence of pixels, which are not taken out as a block, are judged as linear components, and given a label "1," for example.

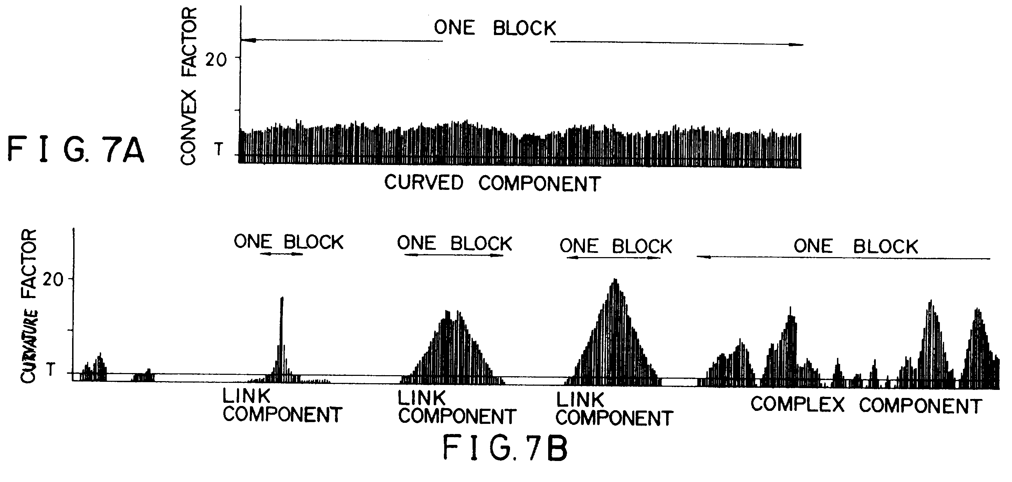

As shown in Fig. 7A, blocks which have one or no peak and have a block width of 2k or greater, and blocks which have two or more peaks and less fluctuation of curvature factors as a whole, are determined as curved components and given a label "2," for example.

Also, as shown in Fig. 7B, if the number of peaks is one, the block width is equal to or less than 2k, and the peak position is approximately at the center of the block (for example, if k = 24, the peak is within a six-dot range from the center of the block width), such a block is determined as a link component and given, for example, a label "3." Particularly, when the peak value $d_p$ of the convex factor satisfies

$$k < dp < k\sqrt{2} \ ,$$

the block is most likely to represent an edge point.

Further, blocks having two or more peaks and their convex factors fairly fluctuating between the peaks, are determined as complex components, and are given, for example, a label "4."

At the time of calculating convex factors in the curvature factor calculating section 18, if the number of the pixels of the traced contour line is below 2k, it is insignificant to obtain the curvature factors, so that such blocks are judged as minute components and given a label "5," for example.

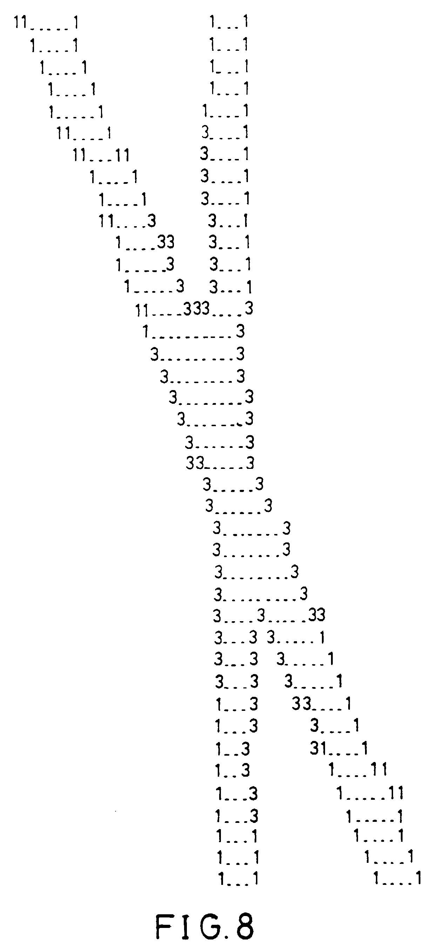

The labels indicating those characteristic components of the individual blocks determined by the contour discriminating section 20, are written at the address in the second image memory 22 corresponding to the pixel coordinates. For example, in the line pattern in Fig. 5A, the label "1" of the linear components and the label "3" of the link components are written at the address corresponding to the pixel coordinates of the contour line, as shown in Fig. 8. Each "." in Fig. 8 illustrates the state in which no label is written yet, and that the initial value "0" has been written into other blank portions by the contour extracting section 16 as described above.

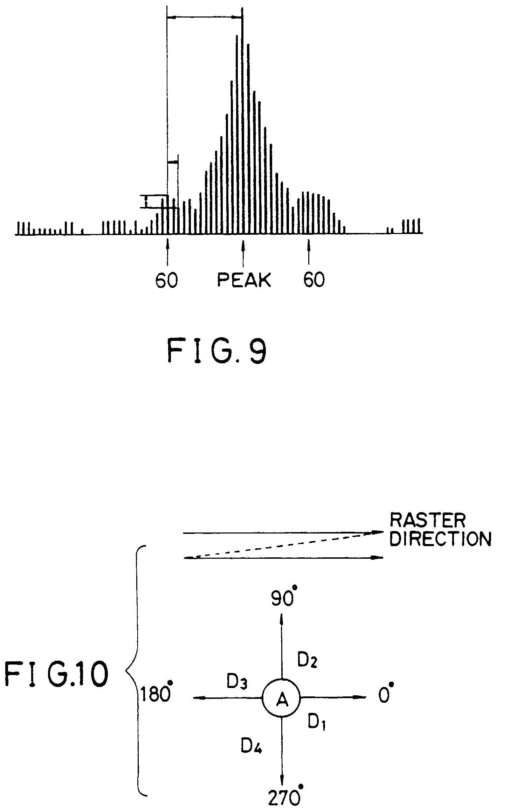

Theoretically, each characteristic component can be decided in the above-described method; however, a little peak may appear into a block due to noise occurring at the time of scanning the pattern by the raster scan type pattern input device 12, or the like. For instance, the block shown in Fig. 9, which should desirably be determined as a link component, may be recognized as a complex component when the method explained above is applied as it is.

Therefore, false peaks are suppressed using the positional relation between adjoining peaks and the difference between a valley located between peaks, and a peak (that of two peaks which has a smaller convex factor). In other words, two peaks whose peak positions are very close to each other, peaks with convex factors differing by a small amount from those of valleys (for example, "2" when span $k = 24$), or peaks which are very close to valleys (for example, five dots when span $k = 24$) would be deleted as being false peaks 60.

## E. Determining Characteristic Components Of Pixels In Pattern

When the contour discriminating section 20 finishes labeling, the label propagation section 24 is activated. The following discusses the operation of this label propagation section 24. Fig. 10 illustrates contour searching directions in the label propagation section 24.

The label propagation section 24 performs raster scanning of the first image memory 14 and detects a black pixel "1" (referred to as "A"). A value "-1" has been written in contour pixels constituting a contour line as having been traced. Accordingly, the label propagation section 24 searches for contour pixels around the detected pixel in the searching directions of 0°, 90°, 180° and 270°, and acquires distances $D_1$, $D_2$, $D_3$ and $D_4$ (units being dots) in the respective directions. Then, the shortest one of the acquired distances is detected, and a label of that contour pixel which gives this shortest distance is obtained from the second image memory 22. This label is written at the address in the second image memory 22 which corresponds to the pixel A. When the above operation is executed for all the black pixels in the first image memory 14, the operation of the label propagation section 24 is completed. Accordingly, labels associated with line patterns are written in the second image memory 22. If there are a plurality of contour pixels which give the shortest distance, selection is made according to the order of the priority of $D_1 \rightarrow D_2 \rightarrow D_3 \rightarrow D_4$.

In other words, the label propagation section 24 gives a label of a characteristic component to a pixel in a contour line or a pixel surrounded by contour pixels;

this is conducted by searching pixels in vertical and horizontal directions around an unlabeled pixel in a contour line as a target pixel for that contour pixel which is closest to the target pixel and giving the same label as that contour pixel to the target pixel. This process is executed for all the pixels in the contour line, so that the line of a line pattern can be separated into individual characteristic components.

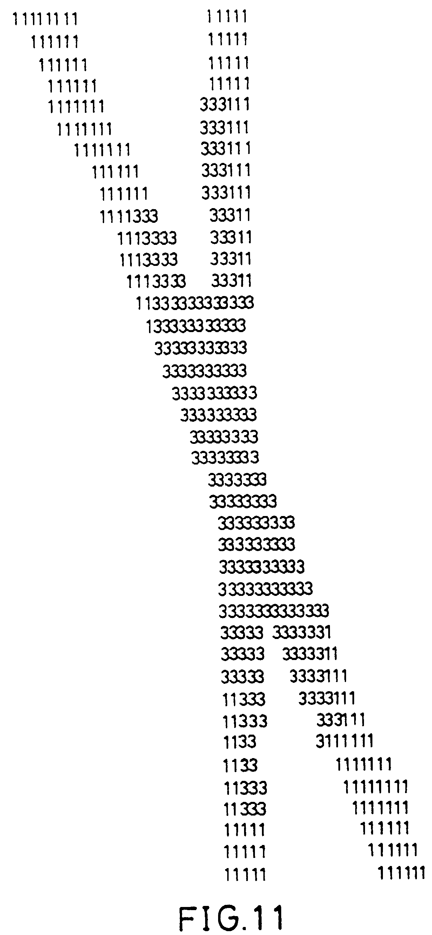

As a result, the content of the second image memory 22 is rewritten to, for example, the label status as shown in Fig. 11 from the one shown in Fig. 8. That is, "." is rewritten to the same label as the closest one.

## F. Separation of Connective Components

Then, the connective component separation section 26 is operated. First, connective components having a label "5" among the labels stored in the second image memory 22, are acquired and are given different values (6, 7, 8, ..., L+5), the pixel belonging to the k-th connective component is given a value of (k+5), and the content of the second image memory 22 is rewritten. Here, "L" is the number of connective components.

Then, connective components having a label "4" among the those stored in the second image memory 22, are acquired and are given different values (L+6, L+7, ..., L+M+5), the pixel belonging to the k-th connective component is given a value of (L+k+5), and the content of the second image memory 22 is rewritten. Here, "M" is the number of connective components.

Likewise, connective components having a label "3" are acquired and are given different values (L+M+6, L+M+7, ..., L+M+N+5), the pixel belonging to the k-th connective component is given a value of (L+M+k+5), and the content of the second image memory 22 is rewritten; connective components having a label "2" are acquired and are given different values (L+M+N+6, L+M+N+7, ..., L+M+N+P+5), the pixel belonging to the k-th connective component is given a value of (L+M+N+k+5), and the content of the second image memory 22 is rewritten; and connective components having a label "1" are acquired and are given different values (L+M+N+P+6, L+M+N+P+7, ..., L+M+N+P+Q+5), the pixel belonging to the k-th connective component is given a value of (L+M+N+P+k+5), and the content of the second image memory 22 is rewritten. Here "N," "P" and "Q" are each the number of connective components.

These connective components can easily be acquired by a well-known method as disclosed in "Toriwaki: Digital Image Processing for Understanding Images (II)," Shokodo, 1988, 4.30, PP. 44-48.

Throughout the above operation, it is possible to recognize a pixel having C in the second image memory 22 to be $C \geq L+M+N+P+6$ as a pixel constituting a straight line, a pixel having C to be $L+M+N+6 \leq C \leq L+M+N+P+5$ as a pixel constituting a curve, a pixel having C to be $L+M+6 \leq C \leq L+M+N+5$ as a pixel constituting a link portion, such as an edge portion, branching portion, or turning portion, a pixel having C to be L+6 ≦ C ≦ L+M+5 as a pixel constituting a complex portion, such as a portion overlapping a symbol or a character, and a pixel having C to be 6 ≦ C ≦ L+5 as a pixel constituting a minute portion, such as an isolated character or symbol.

## II. Experimental Examples

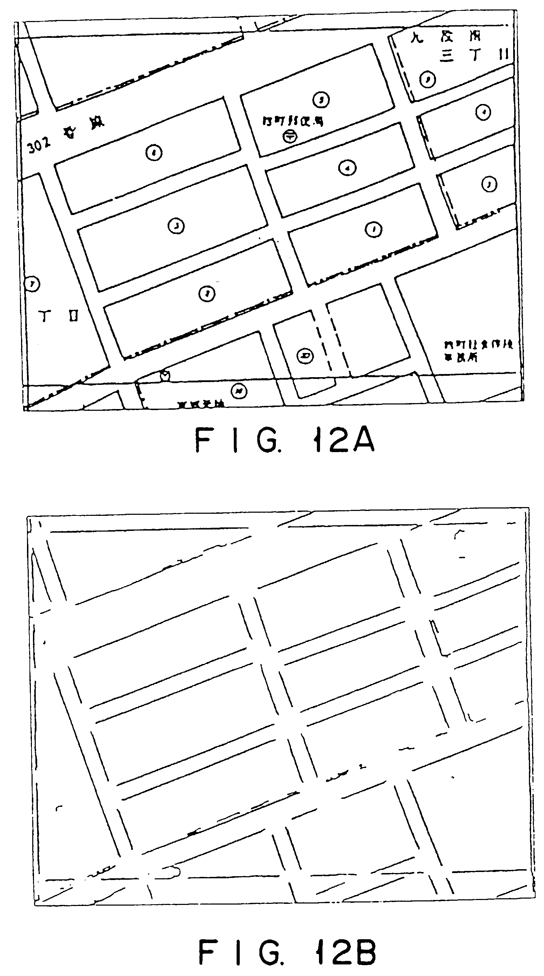

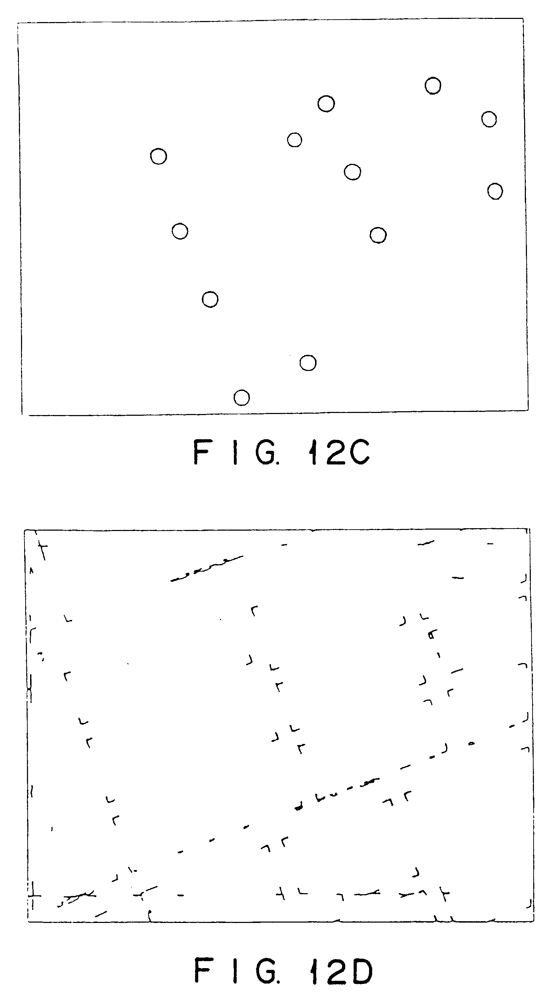

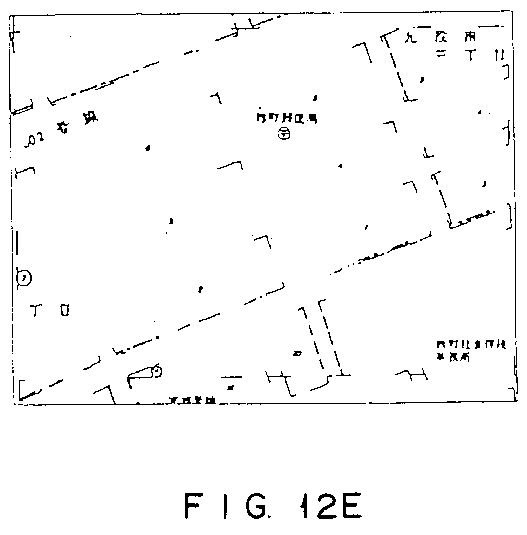

Experimental examples are illustrated in Figs. 12A to 12E. Fig. 12A shows an original pattern scanned by the raster scan type pattern input device 12, and Figs. 12B to 12E respectively show the results of printed linear components, curved components, link components, and complex and minute components, based on the connective components written into the second image memory 22.

The input resolution of the scanner density is 400 DPI, and the pattern size is 1024 x 800 pixels. The span k was set as "24," which means that in the actual pattern, the curvature factors are to be calculated using pixels 1.5 mm away from the pixel of interest. The extractable straight line is, therefore, equal to or longer than 3 mm. The threshold value T of the linear line was set to "1.5."

## III. Another Embodiment

The present invention is not limited to the embodiment described above and illustrated, but can be modified and applied in various manners without departing from the scope of the present invention.

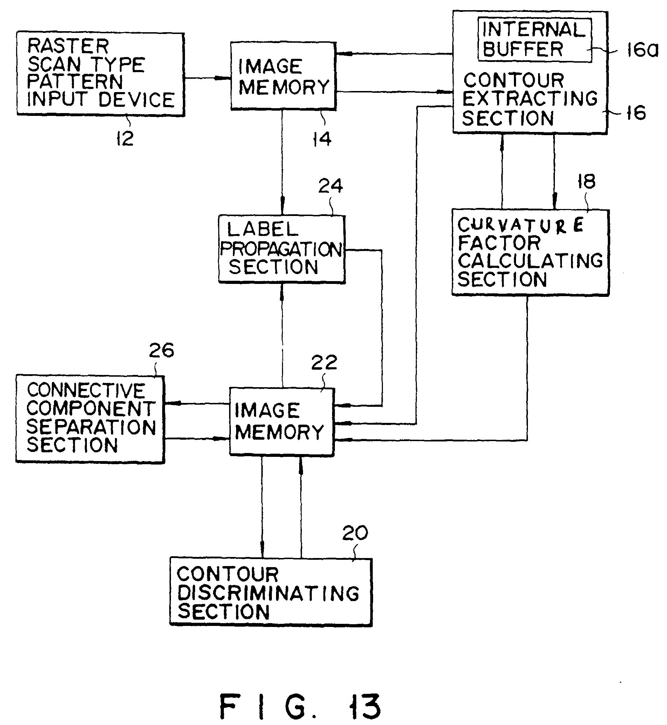

As shown in Fig. 13, for example, the contour discriminating section 20 may be operated after temporary storage of the curvature factor calculated by the curvature factor calculating section 18 in the second image memory 22, to thereby rewrite the curvature factor stored in the second image memory 22 to a label.

The curvature factor defined by the equation (1) may also be defined by the ratio of the distance di to the length of the line Li, or by the curvature of an arc passing three points, $A_{i-k}$, $A_i$, and $A_{i+k}$, or by the x or y component of the distance di. In any case, it is obvious that the same effect should be attained.

## IV. Effect

As apparent from the results, according to the present invention, it is possible to distinguish lines only by referring to the pixel values, and recognize branching portions, intersection portions, and turning portions of the lines, which are difficult to recognize due to deformation caused according to the prior art. The whole processing can be done by a simple operation such as raster scanning, except for the contour extracting section 16, facilitating realization of the processing by hardware.

Therefore, the present invention can provide a pattern recognizing apparatus which can simultaneously perform recognition of lines constituting a pattern without fine-lining the pattern, and recognition of characteristic components, such as linear components, curved components, linked components, complex components and minute components of the lines, and can separate and distinguish the individual characteristic components.

The pattern recognizing apparatus of the present invention can recognize, in advance, those portions which are easy to produce processing deformation, such as branching portions, intersecting portions and turning portions of lines, and eliminate them, so that applying it as preprocessing of a process of providing vectors of a pattern can facilitate the vector processing of the pattern.

## Claims

1. A pattern recognition apparatus in which pixel information acquired by scanning a pattern is stored in a first memory and said pattern is recognized based on said pixel information stored in said first image memory, said apparatus comprising

contour extracting means (16) for tracing a contour of a pattern from said pixel information stored in said first image memory and acquiring a sequence of coordinates of contour pixels;
curvature factor calculating means (18) for transforming each contour pixel into a curvature factor representing a value indicating a curvature status from said sequence of coordinates of said contour pixels acquired by said contour extracting means (16);
recognizing means for recognizing lines constituting a pattern from said curvature factors calculated by said curvature factor calculating means (18);
wherein said curvature factor is a distance ($d_i$) from a contour pixel ($A_i$) for curvature calculation to a line connecting two contour pixels ($A_{i-k}$, $A_{i+k}$) ahead and behind by a predetermined number (k) of contour pixels from said contour pixel ($A_i$) for which the curvature factor is calculated;
discriminating means (20) for discriminating which kind of characteristic component, a linear component, a curved component, a complex component or a minute component, said contour pixel is, from said curvature factor,
said discriminating means (20) including

block extracting means for extracting a sequence of contour pixels whose curvature factors exceed a threshold value (T) which is defined for "straight line", as one block,
means for storing a label ("1") indicating a linear component into said second image memory (22), with a sequence of contour pixels not extracted by said block extracting means taken as said linear component,

peak calculating means for calculating positions and quantity of peaks of the curvature facture in a block extracted by said block extracting means,

block width detecting means for detecting a width of a block extracted by said block extracting means, and

characteristic component discriminating means for discriminating which one of a curved component, a link component and a complex component said contour pixel is, based on said quantity and positions of peaks calculated by said peak calculating means and said block width detected by said block width detecting means.

2. A pattern recognizing apparatus according to claim 1, wherein said recognizing means includes:

characteristic component propagation means (24) for determining a characteristic component of a pixel in a line, which pixel is surrounded by said contour pixels, based on said characteristic component discriminated by said discriminating means and pixel information stored in said first image memory (14); and

connective or link component separating means (26) for separating each characteristic component for each link component, by giving each connective component where the pixels have the same label, a label of its own.

3. A pattern recognizing apparatus according to claim 2, wherein said recognizing means further includes a second image memory (22);

said discriminating means (20) stores labels indicating said discriminated characteristic components into said second image memory (22) at addresses corresponding to said determined contour pixels;

said characteristic component propagation means (24) determines a characteristic component of a pixel in a line, which pixel is surrounded by said labels, based on said labels stored in said second image memory (22) and said pixel information stored in said first image memory (14), and stores a label indicating said characteristic component into said second image memory (22) at an address corresponding to said discriminated pixel in said line; and

said link component separating means (26) separates each label for each link component from said labels stored in said second image memory (22).

4. A pattern recognizing apparatus according to claim 3, wherein said curvature factor calculating means (18) stores a calculated curvature factor into said second image memory (22); and

said discriminating means (20) discriminates a characteristic component from said curvature factor stored in said second image memory (22).

5. A pattern recognizing apparatus according to claim 2, wherein said characteristic component propagation means (24) determines a characteristic component of the closest contour pixel as a characteristic component of said pixel in said line.

6. A pattern recognizing apparatus according to any of claims 1 to 5, wherein said characteristic component discriminating means stores a label ("2") indicating a curved component into said second image memory (22), with a contour pixel taken as said curved component, when said quantity of peaks calculated by said peak calculating means is one or less and said block width detected by said block width detecting means is twice or greater than said predetermined quantity (k), or when said quantity of peaks is two or greater and a fluctuation of said convex factors is small;

stores a label ("3") indicating a link component into said second image memory (22), with a contour pixel taken as said link component, when said quantity of peaks is one, said block width is twice or smaller than said predetermined quantity (k), and said position of said peak is at a vicinity of a center of said block; and stores a label ("4") indicating a complex component into said second image memory (22), with a contour pixel taken as said complex component, when said quantity of peaks is equal to or greater than two and said convex factor fluctuates between peaks.

7. A pattern recognizing apparatus according to claim 7, wherein said recognizing means further includes means for storing a label ("5") indicating a minute component into said second image memory (22), with a contour pixel not transformed into a convex factor by said convex factor calculating means (18) taken as said minute component.

**Patentansprüche**

1. Mustererkennungsvorrichtung, bei der durch Abtasten eines Musters erfaßte Bildpunktinformationen in einem ersten Speicher gespeichert werden und das Muster auf der Basis der in dem ersten Bildspeicher gespeicherten Bildpunktinformationen erkannt wird, wobei die Vorrichtung umfaßt:

eine Umrißgewinnungseinrichtung (16) zum Nachfahren eines Umrisses eines Musters der in dem ersten Bildspeicher gespeicherten Bildpunktinformationen und zum Erfassen einer Reihe von Koordinaten von Umrißbildpunkten, eine Krümmungsfaktor-Berechnungseinrichtung (18) zum Transformieren jedes Umrißbildpunktes in einen Krümmungsfaktor, der einen einen Krümmungszustand kennzeichnenden Wert darstellt, aus der von der Umrißgewinnungseinrichtung (16) erfaßten Reihe von Koordinaten der Umrißbildpunkte, eine Erkennungseinrichtung zum Erkennen von ein Muster bildenden Zeilen aus den von der Krümmungsfaktor-Berechnungseinrichtung (18) berechneten Krümmungsfaktoren, wobei der Krümmungsfaktor ein Abstand $(d_i)$ von einem Umrißbildpunkt $(A_i)$ für die Krümmungsberechnung zu einer Zeile ist, die zwei Umrißbildpunkte $(A_{i-k}, A_{i+k})$ eine vorbestimmte Anzahl (k) von Umrißbildpunkten vor und hinter dem Umrißbildpunkt $(A_i)$ verbindet, für den der Krümmungsfaktor berechnet wird, einer Entscheidungseinrichtung (20) zum Entscheiden aus dem Krümmungsfaktor, welche Art einer charakteristischen Komponente der Umrißbildpunkt darstellt, ob eine lineare Komponente, eine gekrümmte Komponente, eine komplexe Komponente oder eine sehr kleine Komponente,

wobei die Entscheidungseinrichtung (20) aufweist:

eine Blockgewinnungseinrichtung zum Entnehmen einer Reihe von Umrißbildpunkten als ein Block, deren Krümmungsfaktoren einen Schwellenwert (T) übertreffen, der für eine "gerade Linie" definiert ist, eine Einrichtung zum Speichern einer Kennung ("1"), die eine lineare Komponente kennzeichnet, in dem zweiten Bildspeicher (22), wobei eine nicht von der Blockgewinnungseinrichtung entnommene Reihe von Umrißbildpunkten als die lineare Komponente verwendet wird, eine Spitzenberechnungseinrichtung zum Berechnen der Positionen und der Größe von Spitzen von Krümmungsfaktoren in einem von der Blockgewinnungseinrichtung entnommenen Block, eine Blockbreiten-Detektionseinrichtung zum Detektieren der Breite eines von der Blockgewinnungseinrichtung entnommenen Blockes, und eine Entscheidungseinrichtung für die charakteristische Komponente zum Entscheiden, ob der Umrißbildpunkt eine gekrümmte Komponente, eine Verbindungskomponente oder eine komplexe Komponente ist, auf der Basis der von der Spitzenberechnungseinrichtung berechneten Größen und Positionen von Spitzen und der von der Blockbreiten-Detektionseinrichtung detektierten Blockbreite.

2. Mustererkennungsvorrichtung gemäß Anspruch 1, wobei die Erkennungseinrichtung aufweist:

eine Ausbreitungseinrichtung (24) für die charakteristische Komponente zum Bestimmen einer charakteristischen Komponente eines Bildpunktes in einer Zeile, wobei der Bildpunkt von den Umrißbildpunkten umgeben ist, auf der Basis der von der Entscheidungseinrichtung gefundenen charakteristischen Komponente und der in dem ersten Bildspeicher (14) gespeicherten Bildpunktinformationen, und eine Trennungseinrichtung (24) für eine verbindende Komponente oder eine Verbindungskomponente zum Trennen jeder charakteristischen Komponente für jede Verbindungskomponente durch Zuweisen einer eigenen Kennung für jede verbindende Komponente, wenn die Bildpunkte die gleiche Kennung haben.

3. Mustererkennungsvorrichtung gemäß Anspruch 2,

wobei die Erkennungseinrichtung weiterhin einen zweiten Bildspeicher (22) aufweist, die Entscheidungseinrichtung (20) Kennungen, die die gefundenen charakteristischen Komponenten kennzeichnen, bei Adressen, die den bestimmten Umrißpixeln entsprechen, in den zweiten Bildspeicher (22) speichert, die Ausbreitungseinrichtung (24) für die charakteristische Komponente eine charakteristische Komponente eines Bildpunktes in einer Zeile, wobei der Bildpunkt von den Kennungen umgeben ist, auf der Basis der in dem zweiten Bildspeicher (22) gespeicherten Kennungen und der in dem ersten Bildspeicher (14) gespeicherten Bildpunktinformationen bestimmt, und eine Kennung, die die charakteristische Komponente kennzeichnet, an einer Adresse, die dem bestimmten Bildpunkt in der Zeile entspricht, in den zweiten Bildspeicher (22) speichert, und die Verbindungskomponenten-Trenneinrichtung (26) jede Kennung für jede Verbindungskomponente von den in dem zweiten Bildspeicher (22) gespeicherten Kennungen trennt.

4. Mustererkennungsvorrichtung gemäß Anspruch 3,

wobei die Krümmungsfaktor-Berechnungseinrichtung (18) einen berechneten Krümmungsfaktor in dem zweiten Bildspeicher (22) speichert, und

die Entscheidungseinrichtung (20) eine charakteristische Komponente von dem in dem zweiten Bildspeicher (22) gespeicherten Krümmungsfaktor unterscheidet.

5. Mustererkennungsanspruch gemäß Anspruch 2, wobei die Ausbreitungseinrichtung (24) für die charakteristische Komponente eine charakteristische Komponente des am nächsten liegenden Umrißbildpunktes als eine charakteristische Komponente des Bildpunktes in der Zeile bestimmt.

6. Mustererkennungsvorrichtung gemäß einen der Ansprüche 1 bis 5,

wobei die Entscheidungseinrichtung für die charakteristische Komponente eine Kennung ("2"), die eine gekrümmte Komponente kennzeichnet, in dem zweiten Bildspeicher (22) speichert, wobei ein Umrißbildpunkt als die gekrümmte Komponente verwendet wird, wenn die Größe der von der Spitzenberechnungseinrichtung berechneten Spitzen eins oder weniger ist, und die von der Blockbreiten-Detektionseinrichtung detektierte Blockbreite das Doppelte oder mehr als die vorbestimmte Größe (k) ist, oder wenn die Größe der Spitzen zwei oder größer ist und eine Fluktuation der konvexen Faktoren gering ist, eine Kennung ("3"), die eine Verbindungskomponente kennzeichnet, in dem zweiten Bildspeicher (22) speichert, wobei ein Umrißbildpunkt als die Verbindungskomponente verwendet wird, wenn die Größe der Spitzen eins ist, die Blockbreite das Doppelte oder weniger als die vorbestimmte Größe k ist, und die Position der Spitze sich in der Nähe eines Mittelpunktes des Blockes befindet, und eine Kennung ("4"), die eine komplexe Komponente kennzeichnet, in dem zweiten Bildspeicher (22) speichert, wobei ein Umrißbildpunkt als die komplexe Komponente verwendet wird, wenn die Größe der Spitzen gleich oder größer als zwei ist und der konvexe Faktor zwischen Spitzen fluktuiert.

7. Mustererkennungsvorrichtung gemäß Anspruch 6, wobei die Erkennungseinrichtung weiterhin eine Einrichtung zum Speichern einer Kennung ("5"), die eine sehr kleine Komponente kennzeichnet, in dem zweiten Bildspeicher (22) aufweist, wobei ein Umrißbildpunkt als die sehr kleine Komponente verwendet wird, der von der Berechnungseinrichtung (18) für den konvexen Faktor nicht in einen konvexen Faktor transformiert wurde.

## Revendications

1. Appareil de reconnaissance de forme dans lequel une information en pixels acquise en balayant une forme est enregistrée dans une première mémoire et ladite forme est reconnue à partir de ladite information en pixels enregistrée dans ladite première mémoire d'image, ledit appareil comprenant

un moyen d'extraction de contour (16) pour tracer un contour de forme à partir de ladite information en pixels enregistrée dans ladite première mémoire d'image et en acquérant une série de coordonnées de pixels de contour;
un moyen de calcul de facteur de courbure (18) pour transformer chaque pixel de contour en un facteur de courbure représentant une valeur indiquant un état de courbure à partir de ladite série de coordonnées desdits pixels de contour acquis par ledit moyen d'extraction de contour (16);
un moyen de reconnaissance pour reconnaître les lignes constituant une forme à partir des facteurs de courbure calculés par ledit moyen de calcul de facteur de courbure (18);

dans lequel ledit facteur de courbure est une distance ($d_i$) depuis un pixel de contour ($A_i$), pour lequel est réalisé le calcul de courbure, à une droite reliant deux pixels de contour ($A_{i-k}$, $A_{i+k}$) situés un nombre prédéterminé (k) de pixels de contour avant et après ledit pixel de contour ($A_i$) pour lequel le facteur de courbure est calculé;

un moyen de discrimination (20) pour discriminer quel type d'élément caractéristique, élément linéaire, courbe, complexe ou petit, est ledit pixel de contour, à partir du facteur de courbure,
ledit moyen de discrimination (20) comportant un moyen d'extraction de bloc pour extraire, sous la forme d'un bloc, une série de pixels de contour dont les facteurs de courbure dépassent une valeur seuil (T) qui est définie pour une "ligne droite",
un moyen d'enregistrement d'une étiquette ("1"), indiquant un élément linéaire, dans ladite seconde mémoire d'image (22), pour une série de pixels de contour, non extraite par ledit moyen d'extraction de bloc, considérée comme étant ledit élément linéaire,
un moyen de calcul de pic pour calculer les positions et la quantité de pics du facteur de courbure d'un bloc extrait par ledit moyen d'extraction de bloc,
un moyen de détection de largeur de bloc pour détecter la largeur d'un bloc extrait par le dit moyen d'extraction de bloc, et

un moyen de discrimination d'élément caractéristique pour distinguer quel élément est ledit pixel de contour, parmi les éléments courbe, lié ou complexe, à partir de ladite quantité et desdites positions de pics calculées par ledit moyen de calcul de pic et ladite largeur de bloc détectée par ledit moyen de détection de largeur de bloc.

2.   Appareil de reconnaissance de forme selon la revendication 1, dans lequel ledit moyen de reconnaissance comporte:

un moyen de propagation d'élément caractéristique (24) pour déterminer l'élément caractéristique d'un pixel appartenant à une ligne, lequel pixel est entouré desdits pixels de contour à partir dudit élément caractéristique discriminé par ledit moyen de discrimination et de l'information en pixels enregistrée dans ladite première mémoire d'image (14); et
un moyen de séparation d'élément de liaison ou de rattachement (26) pour séparer chaque élément caractéristique pour chaque élément de liaison, en donnant à chaque élément de liaison, dans une zone où les pixels ont la même étiquette, une étiquette qui lui est propre.

3.   Appareil de reconnaissance de forme selon la revendication 2, dans lequel ledit moyen de reconnaissance comporte de plus une seconde mémoire d'image (22);

ledit moyen de discrimination (20) enregistre les étiquettes indiquant lesdits éléments caractéristiques discriminés, dans ladite seconde mémoire d'image (22), aux adresses correspondant auxdits pixels de contour déterminés; ledit moyen de propagation d'élément caractéristique (24) détermine l'élément caractéristique d'un pixel appartenant à une ligne, lequel pixel est entouré desdites étiquettes, à partir desdites étiquettes enregistrées dans ladite seconde mémoire d'image (22) et ladite information en pixels enregistrée dans ladite première mémoire d'image (14), et enregistre une étiquette indiquant ledit élément caractéristique dans ladite seconde mémoire d'image (22) à une adresse correspondant audit pixel discriminé appartenant à ladite ligne; et
ledit moyen de séparation d'élément de liaison (26) sépare chaque étiquette pour chaque élément de liaison à partir desdites étiquettes enregistrées dans ladite seconde mémoire d'image (22).

4.   Appareil de reconnaissance de forme selon la revendication 3, dans lequel ledit moyen de calcul de facteur de courbure (18) enregistre un facteur de courbure calculé dans ladite seconde mémoire d'image (22); et
ledit moyen de discrimination (20) discrimine un élément caractéristique à partir dudit facteur de courbure enregistré dans ladite seconde mémoire d'image (22).

5.   Appareil de reconnaissance de forme selon la revendication 2, dans lequel ledit moyen de propagation d'élément caractéristique (24) détermine l'élément caractéristique du pixel de contour le plus proche comme l'élément caractéristique dudit pixel de ladite ligne.

6.   Appareil de reconnaissance de forme selon l'une quelconque des revendications 1 à 5, dans lequel ledit moyen de discrimination d'élément caractéristique enregistre une étiquette ("2") indiquant un élément courbe dans ladite seconde mémoire d'image (22), pour un pixel de contour considéré comme étant ledit élément courbe, quand ladite quantité de pics calculée par ledit moyen de calcul de pic est égale à un ou moins et que ladite largeur de bloc détectée par ledit moyen de détection de largeur de bloc est deux fois ou supérieure à deux fois ladite quantité prédéterminée (k), ou quand ladite quantité de pics est égale à deux ou plus et que la fluctuation desdits facteurs de courbure est faible;

enregistre une étiquette ("3") indiquant un élément de liaison dans la seconde mémoire d'image (22), pour un pixel de contour considéré comme étant ledit élément de liaison, quand ladite quantité de pics est égale à un, que ladite largeur de bloc est deux fois ou inférieure à deux fois ladite quantité prédéterminée (k), et que ladite position dudit pic est au voisinage du centre dudit bloc; et
enregistre une étiquette ("4") indiquant un élément complexe dans ladite seconde mémoire d'image (22), pour un pixel de contour considéré comme étant ledit élément complexe, quand ladite quantité de pics est égale ou supérieure à deux et que ledit facteur de courbure fluctue entre les pics.

7.   Appareil de reconnaissance de forme selon la revendication 6, dans lequel ledit moyen de reconnaissance comporte de plus un moyen pour enregistrer une étiquette ("5") indiquant un petit élément dans ladite seconde mémoire d'image (22), pour un pixel de contour non transformé en facteur de courbure par ledit moyen de calcul de facteur de courbure (18), considéré comme étant ledit petit élé-ment.

F I G. 1

START

TRACE CONTOUR
LINE — S1

CALCULATE
CURVATURE FACTOR — S2

SEPARATE
CHARACTERISTIC
COMPONENTS — S3
(LABELING)

(AFTER TRACING
OF ALL
CONTOUR LINES)

TRANSFER LABELS OF
CONTOUR LINE
TO PIXELS IN PATTERN — S4

SEPARATE CONNECTIVE
COMPONENT — S5

END

F I G.  2

14 : FIRST IMAGE MEMORY

FIG.3

EP 0 422 245 B1

FIG.4

FIG.5A

FIG.5B

CURVATURE FACTOR

START

EXTRACT SEQUENCE OF PIXELS
WHOSE CURVATURE FACTORS
EXCEED A THRESHOLD
VALUE OF A STRAIGHT
LINE AS ONE BLOCK — S11

ACQUIRE THE POSITION
AND QUANTITY OF PEAKS — S12

DETERMINE CHARACTERISTIC
COMPONENT BASED ON
PEAK INFORMATION
AND BLOCK WIDTH — S13

WRITE LABEL INTO
SECOND IMAGE MEMORY — S14

END

F I G. 6

FIG. 7A

FIG. 7B

CONVEX FACTOR

CURVATURE FACTOR

ONE BLOCK

CURVED COMPONENT

ONE BLOCK    ONE BLOCK    ONE BLOCK    ONE BLOCK

LINK COMPONENT    LINK COMPONENT    LINK COMPONENT    COMPLEX COMPONENT

```
11......1                    1...1
  1....1                     1...1
   1....1                    1..1
    1....1                   1...1
     1......1               1....1
      11....1              3....1
       11...11             3....1
        1....1             3....1
        1....1             3....1
         11....3           3...1
          1....33          3...1
           1.....3         3...1
            1......3   3...1
             11.....333....3
              1..........3
              3.........3
              3........3
               3........3
               3......3
                3.....3
                33.....3
                 3.....3
                 3......3
                  3.......3
                  3......3
                  3........3
                  3........3
                  3....3.....33
                  3...3 3.....1
                  3...3  3.....1
                  3...3   3.....1
                  1...3    33....1
                  1...3      3....1
                  1..3       31....1
                  1..3         1....11
                  1...3         1.....11
                  1...3          1.....1
                  1...1          1....1
                  1...1           1....1
                  1...1            1....1
```

# F I G. 8

FIG.9

FIG.10

```
11111111              11111
 111111               11111
  111111              11111
   111111             11111
   1111111            333111
    1111111           333111
     1111111          333111
      111111          333111
       111111         333111
        1111333        33311
          1113333      33311
          1113333      33311
           1113333     33311
            1133333333333
             133333333333
              3333333333
              3333333333
               3333333333
                333333333
                 33333333
                 33333333
                  3333333
                  33333333
                   333333333
                   333333333
                   3333333333
                   33333333333
                   333333333333
                   33333 3333331
                   33333  3333311
                   33333  3333111
                   11333   3333111
                   11333    333111
                   1133     3111111
                   1133      1111111
                   11333      11111111
                   11333       1111111
                   11111        111111
                   11111         111111
                   11111          111111
```

# FIG.11

F I G. 12A

F I G. 12B

F I G. 12C

F I G. 12D

F I G. 12E

F I G. 13